# FASCICULE DE BREVET EUROPEEN

(11) **EP 1 615 846 B1**
(45) Date de publication et mention de la délivrance du brevet: **28.06.2006**
(21) Numéro de dépôt: 04742358.7
(22) Date de dépôt: 24.03.2004
(51) Int. Cl.: B65G 45/12

(54) **LAME DE RACLEUR**
ABSTREIFERBLATT
SCRAPER BLADE

(30) Priorité: 22.04.2003 FR 0304916
(43) Date de publication de la demande: 18.01.2006
(73) Titulaire: Société Financière de Gestion (Société Civile), 59100 Roubaix (FR)
(72) Inventeur: SIMOENS, Hervé, F-59700 Marcq en Baroeul (FR)
(74) Mandataire: Tournel, Jean Louis
(86) Numéro de dépôt international: PCT/FR2004/000753
(87) Numéro de publication internationale: WO 2004/094277

(56) Documents cités:
- US-A- 4 489 823
- US-B1- 6 182 816

## Description

L'invention se rapporte à une lame de racleur comme décrit dans le préambule de la revendication 1.

Lors du transport des matériaux pondéreux sur des tapis roulant sans fin, le matériau pondéreux a parfois tendance à coller sur le tapis roulant.

Pour éliminer ces dépôts de matière, on utilise un racleur qui s'appuyant sur la face du tapis roulant détache la matière.

Ces racleurs sont montés notamment au niveau de l'organe de renvoi du tapis roulant juste en aval de la zone où le matériau quitte le tapis roulant.

Ces racleurs sont alors appelés racleurs frontaux.

Classiquement, un racleur comprend une ou plusieurs lames de racleur montées sur un support commun, ce support commun comprenant un moyen de mise en tension en vue de solliciter la lame de racleur en direction du tapis roulant.

Ce moyen de mise en tension permet notamment de maintenir la lame en contact avec le tapis au fur et à mesure de l'usure de ladite lame.

Ces lames, pour être interchangeables, présentent un moyen de fixation sur le support, ce moyen de fixation étant plus ou moins élaboré.

De plus en plus souvent, les lames sont réalisées en matière synthétique et pour les fixer sur le support on moule ces lames sur un insert métallique. L'insert est souvent une plaque métallique droite (EP 893 376) ou une sorte de profilé en U inversé (US 5 979 638); le document US-B1- 6 182 816 décrit une lame avec un insert qui a un profil en w.

On constate malheureusement des problèmes de longévité notamment liés aux efforts qui sont transmis dans la lame, ces efforts étant principalement dirigés dans le sens de la hauteur de la dite lame.

La lame doit alors dissiper tous les efforts et il se produit souvent des défauts de liaison entre l'insert et la partie moulée au dessus.

L'invention se propose d'apporter une solution aux problèmes évoqués ci-dessus.

A cet effet, l'invention a pour objet une lame de racleur en matière synthétique moulée sur un insert utilisé pour sa fixation à un support, cette lame de racleur étant caractérisée en ce que l'insert se présente sous la forme d'une plaque métallique comprenant une première partie externe qui prolonge vers le bas la base de la lame de racleur et une seconde partie interne inclinée par rapport à la première partie précitée et cette inclinaison étant telle que les forces qui s'exercent sur la lame lorsque celle ci s'applique sur le convoyeur sont sensiblement perpendiculaires à cette seconde partie.

L'invention sera bien comprise à l'aide de la description ci-après faite à titre d'exemple non limitatif en regard du dessin qui représente schématiquement :

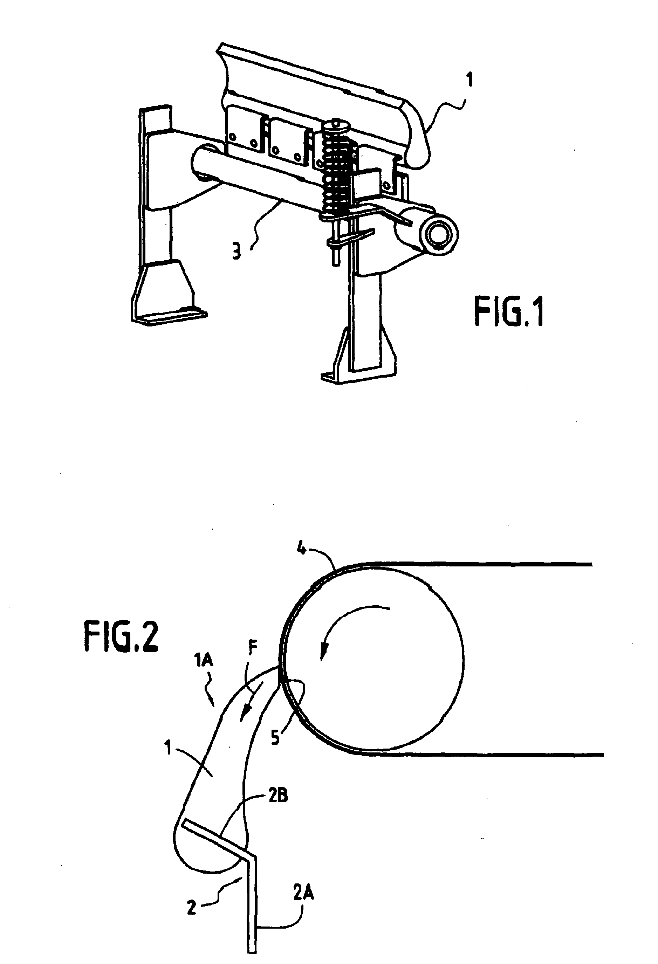

FIG 1 : un racleur en perspective
FIG 2 : une vue de profil

En se reportant au dessin on voit une lame 1 de racleur en matière synthétique moulée sur un insert 2.

Cet insert 2 est notamment utilisé pour fixer la lame sur un support 3 sollicité par un moyen de tension en vue d'appliquer l'extrémité libre 1A de la lame 1 contre la face 4 porteuse d'un tapis de convoyeur.

Cette lame 1 est du type utilisée pour un montage dit frontal.

Cette lame 1 a son extrémité libre 1A qui présente un bord d'attaque et éventuellement une face 5 sensiblement plane qui est montée pour être sensiblement tangente au point d'application de l'arrête de la lame en contact avec le tapis du convoyeur.

Cette lame 1 s'épaissit depuis sa partie supérieure vers le bas.

Elle est légèrement courbée, la concavité étant tournée vers le convoyeur lorsque la lame est montée sur son support.

Les profils de la face frontale et dorsale sont déterminés notamment pour que la lame résiste à la flexion.

L'insert 2 permet de fixer la lame sur un support 3 qui, par un moyen élastique ou autre, tend à appliquer la lame contre la surface du convoyeur à nettoyer.

Le racleur peut être constitué d'une seule lame ou de plusieurs lames montées les unes à coté des autres.

Selon l'invention, l'insert 2 se présente sous la forme d'une plaque 2 métallique comprenant une première partie 2A externe qui prolonge vers le bas la base de la lame 1 de racleur et une seconde partie 2B interne inclinée par rapport à la première partie précitée et cette inclinaison étant telle que les forces F qui s'exercent sur la lame lorsque celle-ci s'applique sur le convoyeur sont sensiblement perpendiculaires à cette seconde partie.

Par sensiblement perpendiculaires, on acceptera une variation de plus ou moins 45° par rapport à une position strictement perpendiculaire.

De cette manière, les forces qui s'exercent sur la lame ne font pas travailler en cisaillement la zone de jonction de la lame avec la plaque mais bien au contraire agissent sur cette plaque en compression et font ainsi travailler la zone de liaison 2C entre les deux parties 2A, 2B de cette plaque en flexion.

La partie 2B est logée dans la lame à distance de la base de la lame synthétique et une faible proportion de cette partie 2B est située en dehors de la matière synthétique.

Comme on peut le voir, la plaque 2 est pliée vers l'arrière de la lame du racleur en sorte que, si par malheur la matière synthétique venait à se détacher de l'insert ou la lame était usée au delà de ce qui est préconisé, il n'y aurait pas de risque d'arrachement du tapis car le contact entre l'insert et le tapis se ferait par une partie arrondie.

Comme cela apparaît sur le dessin, l'inclinaison de la seconde partie 2B de la plaque par rapport à la première 2A est, dans le cas représenté, de 115°, cette angle est défini en fonction de la position du support et de l'organe de renvoi du convoyeur.

Cette première partie 2A de la plaque se trouve devant la base de la lame 1. Elle se trouve dans l'exemple représenté en retrait de la face 5 plane de l'extrémité libre du racleur.

La seconde partie 2B de la plaque traverse la presque totalité de l'épaisseur de la lame.

Cette plaque sera de préférence en acier inoxydable.

Des découpes dans la partie externe permettent le passage de vis.

Pour un meilleur surmoulage, peuvent être prévus des découpes de la partie interne de la plaque.

La largeur de la plaque 2 est inférieure à la largeur de la lame.

## Revendications

1. Lame de racleur en matière synthétique moulée sur un insert (2) **caractérisée en ce que** l'insert (2) se présente sous la forme d'une plaque (2) métallique comprenant une première partie (2A) externe qui prolonge vers le bas la base de la lame (1) de racleur et une seconde partie (2B) interne inclinée par rapport à la première partie précitée et cette inclinaison étant telle que les forces (F) qui s'exercent sur la lame lorsque celle-ci s'applique sur le convoyeur sont sensiblement perpendiculaires à cette seconde partie.

2. Lame de racleur en matière synthétique moulée sur un insert (2) selon la revendication 1 **caractérisée en ce que** la plaque (2) est pliée vers l'arrière de la lame du racleur.

3. Lame de racleur en matière synthétique moulée sur un insert (2) selon les revendications 1 ou 2 **caractérisée en ce que** l'inclinaison de la seconde partie (2B) de la plaque par rapport à la première (2A) est de 115°.

4. Lame de racleur en matière synthétique moulée sur un insert (2) selon la revendications 1 **caractérisée en ce que** la première partie (2A) de la plaque se trouve devant la base de la lame (1).

5. Lame de racleur en matière synthétique moulée sur un insert (2) selon la revendication 1 **caractérisée en ce que** la seconde partie (2B) de la plaque traverse la presque totalité de l'épaisseur de la lame.

## Claims

1. Scraper blade made from synthetic material moulded onto an insert (2), **characterised in that** the insert (2) is provided in the form of a metal plate (2) comprising a first external part (2A) which extends the base of the blade (1) towards the bottom and a second internal part (2B) which is inclined relative to said first part, and this inclination is such that the forces (F) exerted on the blade when it is applied to the conveyor are substantially perpendicular to this second part.

2. Scraper blade made from synthetic material moulded onto an insert (2) as claimed in claim 1, **characterised in that** the plate (2) is bent towards the rear of the scraper blade.

3. Scraper blade made from synthetic material moulded onto an insert (2) as claimed in claims 1 or 2, **characterised in that** the inclination of the second part (2B) of the plate relative to the first (2A) is 115°.

4. Scraper blade made from synthetic material moulded onto an insert (2) as claimed in claim 1, **characterised in that** the first part (2A) of the plate is disposed in front of the base of the blade (1).

5. Scraper blade made from synthetic material moulded onto an insert (2) as claimed in claim 1, **characterised in that** the second part (2B) of the plate extends through almost the entire thickness of the blade.

## Patentansprüche

1. Abstreiferblatt aus Kunststoffmaterial, das an einen Einsatz (2) angeformt ist, **dadurch gekennzeichnet, dass** der Einsatz (2) in Form einer Metallplatte (2) mit einem ersten äußeren Teil (2A) vorliegt, das die Basis des Abstreiferblatts (1) nach unten fortsetzt, und mit einem zweiten inneren Teil (2B), das zum ersten Teil geneigt verläuft, wobei diese Neigung derart ist, dass die Kräfte (F), die auf das Blatt wirken, wenn dieses an den Förderer angedrückt wird, im wesentlichen senkrecht zu diesem zweiten Teil verlaufen.

2. Abstreiferblatt aus Kunststoffmaterial, das an einen Einsatz (2) angeformt ist, nach Anspruch 1, **dadurch gekennzeichnet, dass** die Platte (2) zur Rückseite des Abstreiferblatts umgebogen ist.

3. Abstreiferblatt aus Kunststoffmaterial, das an einen Einsatz (2) angeformt ist, nach Anspruch 1 oder 2, **dadurch gekennzeichnet, dass** die Neigung des zweiten Teils (2B) der Platte zum ersten (2A) 115° beträgt.

4. Abstreiferblatt aus Kunststoffmaterial, das an einen Einsatz (2) angeformt ist, nach Anspruch 1, **dadurch gekennzeichnet, dass** der erste Teil (2A) der Platte vor der Basis des Blatts (1) liegt.

5. Abstreiferblatt aus Kunststoffmaterial, das an einen Einsatz (2) angeformt ist, nach Anspruch 1, **dadurch gekennzeichnet, dass** das zweite Teil (2B) der Platte nahezu die gesamte Dicke des Blatts durchsetzt.
